# EUROPEAN PATENT SPECIFICATION

(11) **EP 1 276 301 B1**
(45) Date of publication and mention of the grant of the patent: **07.12.2005**
(21) Application number: 01305927.4
(22) Date of filing: 10.07.2001
(51) Int. Cl.: H04M 1/725

(54) **Transceiver and method of providing additional service items**
Sende-Empfänger und Verfahren zum Bereitstellen von züsatzlichen Diensten
Emetteur-récepteur et procédé pour fournir des services supplémentaires

(43) Date of publication of application: 15.01.2003
(73) Proprietor: SONY UNITED KINGDOM LIMITED, Weybridge KT13 0XW (GB); Sony International (Europe) GmbH, 10785 Berlin (DE)
(72) Inventor: Mugura, Kazuto, Wimbledon, London SW19 4SA (GB); Gibson, James Campbell, Long Street, London E2 8HN (GB); Liu, Chris Shi-Chai, 81825 Munich (DE)
(74) Representative: Ayers, Martyn Lewis Stanley

(56) References cited:
- WO-A-00/70848
- GB-A- 2 348 082
- US-A- 5 784 001
- US-A- 6 044 248

## Description

The present invention relates to a transceiver capable of transmitting messages and a method of providing additional service items for broadcast, in particular for providing multiple layer graphics at the transceiver.

In the field of digital mobile phones, it is known to send and receive short text messages between the mobile transceivers constituting the mobile phones via base stations. The system by which these messages are sent is known as the Short Message System (SMS).

By means of this system, it is also known to attach icons or illustrations to the text message. For instance, these may be used in order to express the senders emotion.

The icons which are available are very limited and are selected merely in the same way as the text characters.

US 6,044,248 discloses a selective call receiver which includes a code memory storing a plurality of graphic image units and graphic image unit codes, and a plurality of pieces of character data and character data codes. Code information is extracted from a message having a predetermined format. The code information includes a graphic image unit code and a character data code. Based on the code information, a graphic image unit corresponding to the graphic image unit code and a piece of character data corresponding to the character data code are read from the code memory, and then the message with the graphic image unit and the piece of character data is displayed on the display.

The present application is based on a recognition of the need for a system in which more advanced attachments may be sent.

According to the present invention, there is provided a method of providing, for an intercommunicating network of transceivers, additional service items for broadcast with messages, the method including:
storing a plurality of service items in transceivers together with respective data codes;
allowing selection by transceivers of service items for transmission with messages to other transceivers;
providing with messages the data codes of respective service items selected by transceivers such that, upon receipt of messages with data codes, transceivers provide the users with messages together with the service items identified by the data codes; further comprising
storing in the transceivers a plurality of graphical images having respective identifying codes;
allowing selection of two or more graphical images to form a combined picture as a service item;
constructing for the combined pictures data codes for transmission including the identifying codes of the selected graphical images;
deconstructing, when appropriate, received data codes into the respective identifying codes; and
providing combined pictures on the displays of the transceivers on the basis of the graphical images represented by the identifying codes; characterised in that:
   the graphical images are overlaid one on top of the other to form a resultant combined picture by taking each layer in a predetermined order and replacing parts of preceding layers with any parts in the same position in succeeding layers.

According to the present invention there is also provided a transceiver capable of transmitting messages, including:
a memory for storing a plurality of service items together with respective data codes;
a user interface including a display for selecting a service item for transmission with a message;
processing components for transmitting and receiving messages to and from other transceivers; wherein
   the processing components transmit messages together with the data codes of any selected service item and identify the service items of any data codes received with messages such that the service items may be provided to the user;
   the memory is for storing a plurality of graphical images having respective identifying codes;
   the user interface allows selection of two or more graphical images to form a combined picture as a service item; and
   the processing components construct, for the combined pictures, data codes for transmission including the identifying codes of the selected graphical images, deconstruct, when appropriate, received data codes into the respective identifying codes and provide a combined picture on the display on the basis of the graphical images represented by the identifying codes; characterised in that:
      the graphical images of a combined picture are different respective layers of the combined picture and the processing components are configured to form a combined picture by overlaying the graphical images one on top of the other by taking each layer in a predetermined order and replacing parts of preceding layers with any parts in the same position in succeeding layers.

In this way, a user may choose a desired graphical image for each layer and build a desired combined picture accordingly. In the case of a 3 layer combined picture, graphical images could be provided for the background, the mid ground and the foreground.

A message may be sent with a complex image built up from several layers of graphics. For instance, in a three layer structure, an image may comprise a background graphic, a mid-ground graphic and a foreground graphic. The graphic for each layer may be selected individually from a selection of graphics, thereby allowing a user to provide individually customised images.

Advanced attachments in the form of graphics and sound can be sent with a message. Merely by appending additional codes to the text message, it is possible for a receiving transceiver to provide such advanced services. These codes can thus be carried in the existing transmission format and, in a non compliant transceiver, might merely appear at the end of the text message. Sophisticated sounds and graphics are thus also transmitted using very little bandwidth.

Furthermore, by combining the identifying codes of different graphical images together to form data codes, it is possible to provide combined pictures including a mixture of graphical images with the messages. It is not necessary to send separate data codes for each graphical image to form the combined picture or to provide instructions on how to combine the graphical images and yet users are provided with flexibility in forming different combined pictures by combining different graphical images.

Preferably, the invention is used with an intercommunicating network of transceivers using SMS and the messages are SMS messages.

Preferably, for transmission, the processing components arrange the data codes into data bytes together with header bytes.

Hence, transmitting and receiving devices have data of a predetermined format to produce or recognise.

Preferably, the header bytes indicate the number of associated data bytes.

Thus, variable lengths of data including the data codes can be sent and received as defined by the length specified in the header byte.

Preferably, each data code comprises 7 bits.

In this way, an individual data code can individually identify a large number of service items.

Preferably, each identifying code comprises 4 bits.

This allows identification of 16 graphical images. This is considered generally enough for each group of graphical images.

Preferably, for a combined picture of 3 graphical images, the processing components provide a header byte together with 2 data bytes, each including 2 corresponding data codes. Together, the 2 data codes comprise 3 identifying codes and 2 reserved bits.

In this way, 3 different graphical images can be selected from 3 respective groups of graphical images and can be specified by means of only 2 data bytes.

Preferably, the processing components construct data codes with identifying codes in a predetermined order, the position of the identifying codes in the predetermined order signifying how the respective graphical images are to be combined.

Thus, where the graphical images are to be layered one on top of the other, it can be predetermined that a particular position of an identifying code in the order determines the position of the corresponding graphical image in the layers of the combined picture. Similarly, where various groups of graphical images are available, the position of an identifying code within the predetermined order can signify the group of graphical images to which that identifying code applies.

Preferably, the processing components are configured so as to allow selection of each layer of graphics from a respective plurality of service items for graphics by selectively displaying in turn each graphic of the respective plurality of service items for graphics until a graphic is selected for the respective layer.

Thus, the display may show a particular graphic and, upon actuation of an input key, such as a jog dial, the transceiver moves on to display the next graphic. A user can thus move through all of the available graphics until he or she finds the appropriate graphic for selection.

Preferably, the processing components are configured such that, when displaying one graphic of a respective plurality of service items for graphics, said one graphic is displayed as a combined resultant image with graphics selected for other layers.

In this way, when a user is viewing the possible graphics for a particular layer, the transceiver always displays the graphics for that layer in combination with the previously selected graphics for other layers. Hence, the user is presented with a representative view of the final image.

Preferably, the user interface is operable to display in turn each graphical image available for a respective layer and, once a graphical image has been selected for a layer, to display each possible graphical image for the next layer in combination with the graphical image already selected for the previous layer.

Hence, the user is provided with a representation of the final image during the process of selecting the layers.

Preferably, the service items are stored by category, sub-divided by service, with the data codes signifying respective service items within their respective service.

In this way, the same data codes may be used to identify different service items according to the service in which they are provided and according to the category in which the respective service is provided.

Preferably, the header bytes indicate the category and service of the service item of the associated data codes.

In this way, upon receipt of an SMS message, the transceiver can identify the appropriate category and service of the service item from the header byte and then identify the particular service item from the data code.

Preferably, the processing components, upon opening an SMS message with a service item for graphics, cause the graphics to appear over substantially the whole of the display.

Thus, unlike earlier systems in which icons are displayed as part of the text, the entire display may be used for displaying complete graphical images.

Preferably, the user interface is configured with the processing components to enable the user to scroll any text of the received message onto the display.

Thus, the full display is used for displaying the graphics at first and then the user may operate the transceiver to receive the text message.

The text may be scrolled selectively in place of the graphics or on top of the graphics.

Thus, the image may be scrolled off the top, bottom or sides of the display while the text moves into its place.

Preferably the data codes of a plurality of service items may be transmitted together with a message.

Thus, graphics or sounds may be transmitted together.

Preferably, the graphical images may be animated.

Preferably, the invention is embodied as a digital mobile telephone.

Such a mobile telephone may incorporate a jog dial. This is particularly advantageous in conjunction with the process of moving through the various graphical images to select a graphic for each layer and also for scrolling a received message.

The invention will be more clearly understood from the following description, given by way of example only, with reference to the accompanying drawings, in which:
Figure 1 illustrates a digital mobile phone embodying the present invention;
Figure 2 illustrates schematically the structure of the mobile telephone of Figure 1;
Figure 3 illustrates process steps for selecting attachment modes;
Figure 4 illustrates process steps for attaching service items to a text message;
Figure 5 illustrates process steps for selecting service items;
Figure 6 illustrates process steps for selecting graphical layers for service items;
Figure 7 illustrates process steps for selecting headlines of service items;
Figure 8 illustrates definitions of category and service types;
Figure 9 illustrates definitions of header and data for sounds;
Figure 10 illustrates definitions of header and data for graphics.
Figure 11 illustrates definitions of data for boards; and
Figure 12 illustrates definitions of data for graphical layers.

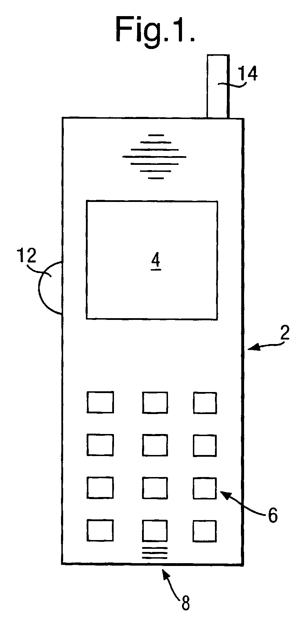

The present invention will be described with reference to a mobile phone of the general construction illustrated in Figure 1. However, it will be appreciated that the invention could also be embodied in other forms of transceiver including mobile phones having different arrangements.

The mobile phone 2 of Figure 1 includes a display 4 and a keypad 6. Furthermore, a microphone 8 is positioned within the housing at the bottom of the phone 2 and a speaker 10 is positioned within the housing at the top of the mobile phone 2. In a known manner, a user may operate the keypad 6 in conjunction with the display 4 so as to make and receive telephone calls.

In the preferred and illustrated embodiment, a jog dial 12 is provided on the side of the mobile phone 2. The jog dial 12 may be rotated so as to scroll illustrations on the display 4 and it may be depressed inwardly of the mobile phone 2 so as to select items illustrated on the display 4. It should be appreciated that, for the purposes of the present invention, the functions of the jog dial 12 can be replaced by other actuators, for instance buttons of the keypad 6.

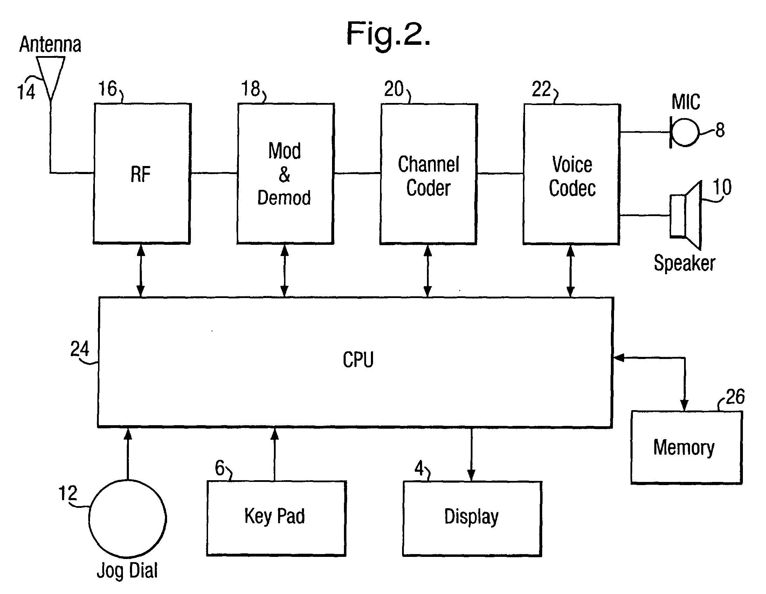

Figure 2 illustrates the general functional arrangement of the mobile phone 2.

Radio signals are received by the antenna 14 which is tuned with the radio frequency section 16. The frequencies selected by the radio frequency section 16 are demodulated by the modulator/demodulator 18 and then the particular channel being used by the telephone 2 at that time is selected by the channel coder 20. Digital data relating to the received audio signal is then converted by the voice coder/decoder 22 and provided to the speaker 10.

In a similar manner, any audio signals received by the microphone 8 are coded by the voice coder/decoder 22, allocated to the required channel by the channel coder 20, modulated by the modulator/demodulator 18 and transmitted by means of the RF tuner 16 and antenna 14.

As illustrated, all of these components may be controlled by a CPU 24 in conjunction with a memory 26. The keypad 6 and jog dial 12 form, together with the display 4, a user interface by which the functions of the mobile phone 2 may be controlled.

In a known manner, rather than use the mobile telephone for a telephone conversation, text may be entered using the keypad 6 and sent to another mobile phone to be viewed on its display. This is known as the Short Message System (SMS).

An enhanced SMS may be provided in which improved graphics may be sent and/or additional sound items. Indeed, animated graphical parts may be sent. In the preferred embodiment, the jog dial 12 is used to control this process. However, other inputs, such as keys of the keypad 6, may be used in its place.

An enhanced message can consist not only of text, but also of one or both of advanced graphics and sound. In particular, according to the present invention, the graphics may consist of a graphic block made up of multiple layers of animated or still graphic planes.

Thus, a user can choose from any one of the following combinations:
1) text only,
2) text and single/multiple layered graphic data,
3) text and sound data,
4) text and single/multiple layered graphic data and sound data,
5) single/multiple layered graphic data only and
6) single/multiple layered graphic data and sound data.

As will become apparent from the description below, the graphics block can be made up of any number of graphic layers. However, in the preferred embodiment, the system would allow up to only three layers, since this provides adequate variety and functionality for users, without unduly complicating the system.

When a message is opened any received sound may be played and, if an image has been sent with that message, the image first appears on the display 4 and then the user rotates the jog dial 12 so as to scroll the image off the display and scroll the text progressively in its place. However, alternatively, the text could be scrolled on top of the image.

According to a preferred embodiment, it is also possible to set preferences for the reception of the messages. For instance, as soon as the transceiver receives a message, it could automatically display the received graphics and play the received sound.

A description will now be given of the preferred steps to be taken by a user to send an enhanced message.

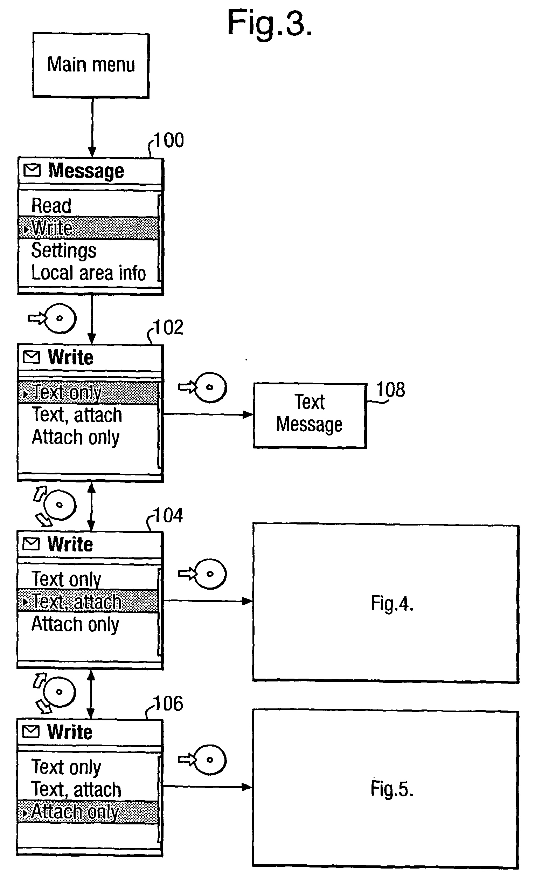

Figures 3 to 6 illustrate the various steps taken and show the content of the display 4 at each step. Furthermore, at the transition between steps, they illustrate diagrammatically operation of the jog dial 12. In particular, the jog dial 12 may be rotated so as to scroll the displayed image or depressed inwardly so as to select a displayed item.

As illustrated in Figure 3, having selected the messaging service from the main menu (for instance by means of the jog dial), the user arrives at the display illustrated for step 100. A number of options are available, including reading and writing options. By rotating the jog dial 12, the highlighting portion of the display may be moved between the various options. However, with the "write" option highlighted, when the user depresses the jog dial 12 into the body of the mobile phone 2 as indicated, the process proceeds to step 102 in which the various message writing options are displayed.

As illustrated in Figure 3, by rotating the jog dial 12, it is possible to proceed between steps 102, 104 and 106 in which the three options, namely "text only", "text, attach" and "attach only", may be selected.

If, in step 102, the option of "text only" is selected by depressing the jog dial 12, then the process proceeds to various steps of text entry as illustrated schematically at 108. It will be appreciated that any suitable known process for entering the text message may be used at this point.

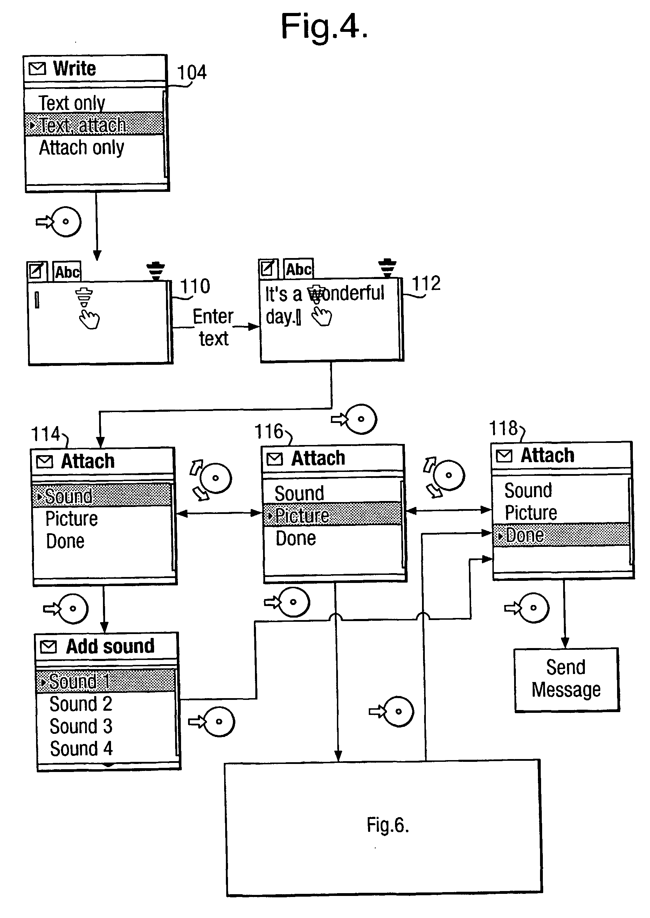

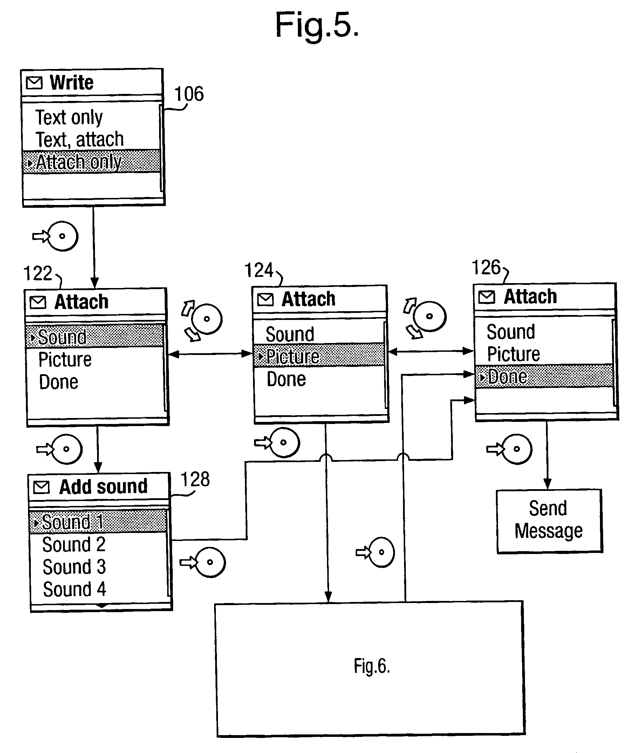

If the option of "text, attach" is selected in step 104, then the process proceeds to that illustrated in Figure 4 and, if the step of "attach only" is selected in step 106, then the process proceeds to that illustrated in Figure 5.

As illustrated in Figure 4, having proceeded from step 104, between steps 110 and 112, the text of the message may be entered using the keypad 6. As mentioned for step 108 above, the precise nature of this process is not essential to the invention and may be carried out in many different ways.

Having selected the finished text, for instance by depression of the jog dial 12, the process proceeds to steps 114, 116 and 118 in which three options for the attach process are given. As illustrated, by rotating the jog dial 12, the highlighted portion of the display 4 may be moved between those three options. In particular, in step 114, the option "sound" may be used to attach a sound, in step 116, the option "picture" may be used to attach graphics and, in step 118, the option "done" can be selected to finish the process and return the display 4 to a menu for sending the completed message.

If at step 114 the jog dial 12 is depressed so as to select the "sound" option, the process proceeds to step 120 in which the display 4 illustrates the various sounds available for selection. By rotating the jog dial 12, the highlighted portion of the display 4 may be moved between the various sound options. In this regard, it should be appreciated that rotating the jog dial 12 can scroll the list of options such that other options, not previously visible, come into view on the display 4.

Having selected one of the options by depressing the jog dial 12, the process moves to step 118. At step 118, the "done" option can be selected or the jog dial 12 can be rotated so as to select a picture from step 116 or return to step 114 to select a different sound.

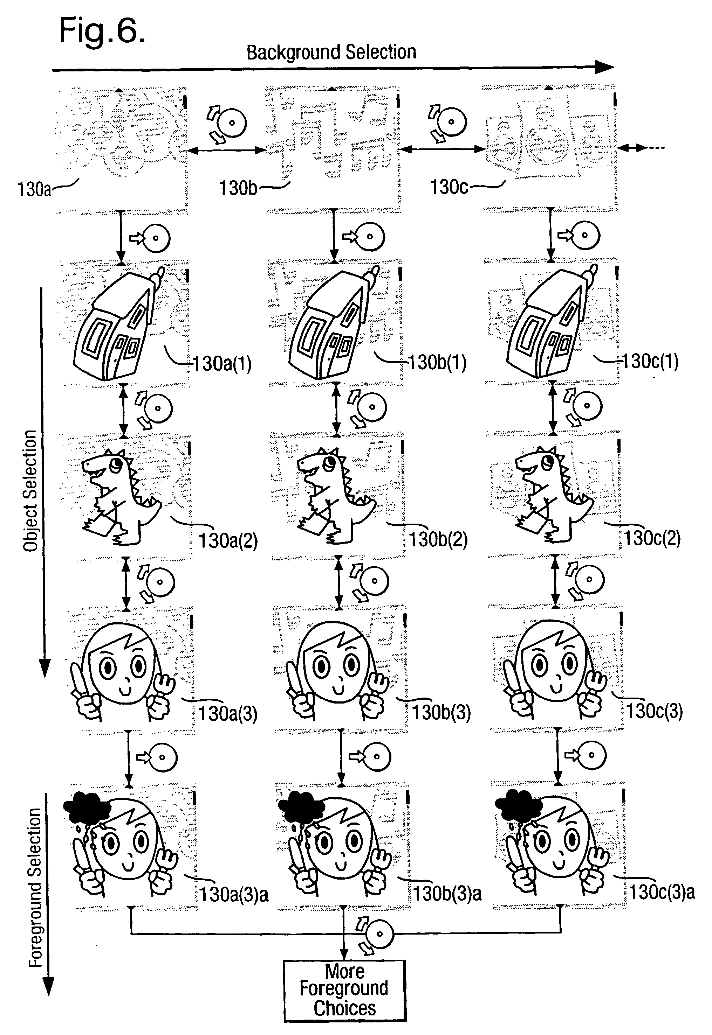

At step 116, if the "picture" option is selected by depressing the jog dial 12, the process moves to the steps illustrated in Figure 6 which allow single or multiple layers of graphics to be selected. Once selected, the process then returns to step 118.

As illustrated in Figure 3, if, in step 106, the jog dial 12 is depressed, the process moves to the steps illustrated in Figure 5.

As illustrated in Figure 5, having selected the "attach only" option in step 106, steps 122, 124, 126 and 128 are provided. These are identical to the attachment steps of 114,116,118 and 120 of Figure 4. The process is conducted in exactly the same way and, hence, no further description is believed necessary.

As mentioned above, where the "picture" option is selected in either step 116 or step 124, the process moves to the steps illustrated in Figure 6. These steps illustrate an embodiment of the present invention in which multiple layers of graphics are built up for transmission.

In the preferred embodiment, as illustrated in Figure 6, three layers of graphics may be built up. It should be understood that to illustrate all combinations for the three layers fully, a three dimensional space would be required. Hence, Figure 6 illustrates only some of the options available.

When proceeding first from steps 116 or 124, the display 4 illustrates a background image for selection. Hence, using the jog dial 12, the user may move between views of different background images 130a,130b,130c, etc. Preferably, one of the available background images is blank, such that the user may choose to produce an image without a background at all.

If the jog dial 12 is depressed while a particular background image is displayed, that image is selected for the background and the process proceeds to steps for object selection for a mid-ground selection.

During mid-ground selection, the selected background image is always displayed while movement of the jog dial 12 causes movement between a variety of selectable mid-ground images. Figure 6 illustrates three possible mid-ground images for each of the background images 130a,130b and 130c. However, it will be appreciated that many other mid-ground images may be available, including a blank image.

When the jog dial 12 is depressed, the mid-ground image currently being displayed is selected. Thus, for the three examples illustrated in Figure 6, the mid-ground image designated by "(3)" and illustrating a face is selected.

The process then moves on to steps for foreground selection. In these steps, the display 4 shows the selected background and mid-ground images all the time while rotation of the jog dial 12 causes the view to move between a selection of different foreground images (again optionally including a blank image). In the steps 130a (3)a, 130b (3)a and 130c (3)a, only a single foreground image, namely a cloud with rain designated by "a", is illustrated.

At this stage, when the jog dial 12 is depressed, the foreground image is selected and the process returns to either step 118 or step 126.

In an alternative embodiment, it is additionally possible to provide a service item which will be described as text on a banner or headline on a board. In particular, a short phrase may be provided on a decorative background or banner and provided as a form of a headline on the display.

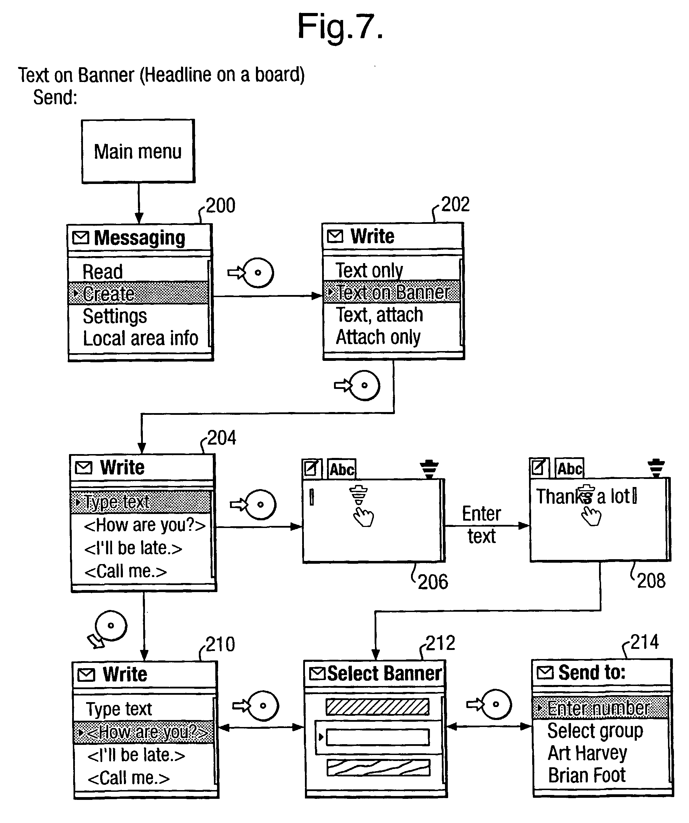

As illustrated in Figure 7, having selected the messaging service from the main menu (for instance by means of the jog dial), the user arrives at the display illustrated for step 200. Having selected "create" (which is directly equivalent to the "write" option of Figure 3), the process proceeds to step 202 in which the various message writing options are displayed.

By comparison to Figure 3, it will be seen that an additional option is presented, namely "text on banner". Selection of "text only", "text, attach" or "attach only" results in process steps directly equivalent to those discussed with reference to Figures 3 to 6. However, selection of "text on banner", for instance by depression of the jog dial 12, causes the process to proceed to step 204.

At this stage, a user can either choose to type a short message for the banner or headline, entering text between steps 206 and 208, or may select one of a number of predetermined short messages as indicated by step 210.

Upon selection of a predetermined message in step 210 or selection of a typed message in step 208, the process proceeds to step 212.

At this stage, the display shows a number of banners of different styles.

Having selected an appropriate banner, the process is ready to transmit the service item with the message and banner. At this stage, the process could return to allow the user to attach a further service item or a normal SMS text message. However, as illustrated, the process proceeds to a final step 214 for entering a particular number or selecting a previously entered telephone number.

In order to provide the selected service items, i.e. graphics or sounds, to other remote transceivers, codes to express the services are included in the SMS text. Thus, transceivers embodying the present invention will hide the code, whereas other transceivers, such as mobile phones already on the market, will display the codes with the rest of the text of the message.

In the preferred system, the services are divided into categories. For instance, category 1 may include services 1, 2, 3 and 4 and category 2 may include services 1, 2, 3 and 4.

It is proposed that several services will be available at once, but that only one service will be available in a category at once.

In the preferred embodiment it is proposed that category 1 should concern the generation of sound when a message is opened. This category need only include one service, namely to generate effective sound/music. Category 2, on the other hand, is responsible for displaying an image on top of the message. Three services are considered, namely service 1 for displaying a predefined picture, service 2 for displaying a headline on a board and service 3 for displaying a combined picture.

An example of sending text, together with coding is as follows:
"Hi! We are in Wien now. This morning, I decided to go to Wien.
   (XX DD XX DD DD CHK)".

In this context, XX denotes a header byte which expresses category, service and length of data byte. DD on the other hand denotes the data byte for the service and CHK denotes a check sum. Thus, header XX may comprise bits aaa bb cc where aaa represent the bits of a category (up to 8 categories), bb represent the bits of a service in a category (up to 4 services in a category) and cc represent the bits of length of data (up to 3 bytes for a service, i.e. from 0 to 3 bytes). Data field DD, on the other hand, comprises bits ddddddd which are the contents of data in a service of a category.

In the preferred embodiment, it is proposed that the coding should be used in the following manner.

The code is entered at the end of the text message, with the first and last characters of the code being parenthesis, i.e. "(" and ")". The second character from the last character is a check code and it is proposed that if the check code is 0x1b, then the check code and the last parenthesis are replaced with "}". If an error of grammar is detected, then the code is ignored.

The combination of category bit aaa = 111 and service bit bb = 11 is used to denote an extension. In other words, the data will be added to the service defined just before. For instance, in the following example, data DD4 and DDS are added to the previous service XX.
XX DD1 DD2 DD3 SS DD4 DD5
Where SS is made up of aaa = 111, bb = 11 and cc = 10.

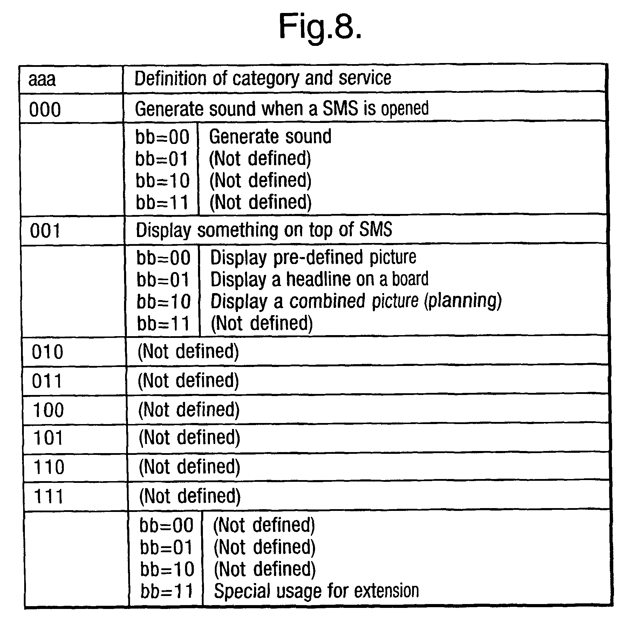

Figure 8 illustrates a definition of category and service for the preferred embodiment. As illustrated, the first category supports a sound effect and the second category supports a picture. As mentioned above, several services can be available at once, but only one service is available from one category at a time.

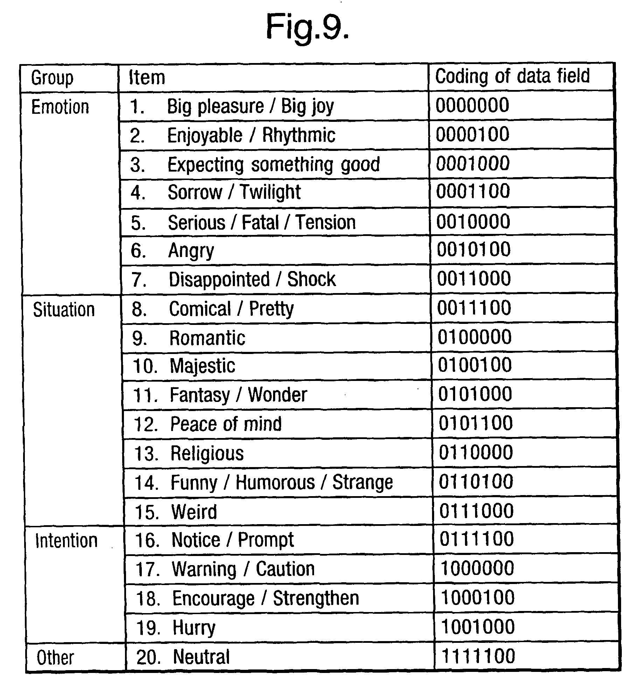

With reference to Figure 8, the function of "generate sound" is to send sound in addition to the normal text message. It need not be a complete song, but a fragment of melody or sound, etc. It is proposed that the available sounds could be sub-divided into various groups and Figure 9 illustrates various sounds in the groups: emotion, situation, intention and other, together with examples of codes. A TI tone generator may be provided in the transceiver for generating the sound, for instance 8 tones simultaneously.

As illustrated in Figure 8, the header XX for the sound is given with a category of aaa = 000 and service bb = 00. Furthermore, the data length cc may be 01 by default with the data DD = ddddddd having the function of supporting 20 kinds of sound.

The function of "display predefined picture" as indicated in Figure 8 causes a predefined picture to be sent, for instance in addition to the text message. This is achieved by sending a code representing the predefined picture. Thus, when a receiving transceiver opens a message, data representing the predefined picture is retrieved from memory in accordance with the code and the predefined picture is displayed on the display of the receiver. According to this particular function, it is proposed that a user can then read the text message by scrolling up the display with the jog dial.

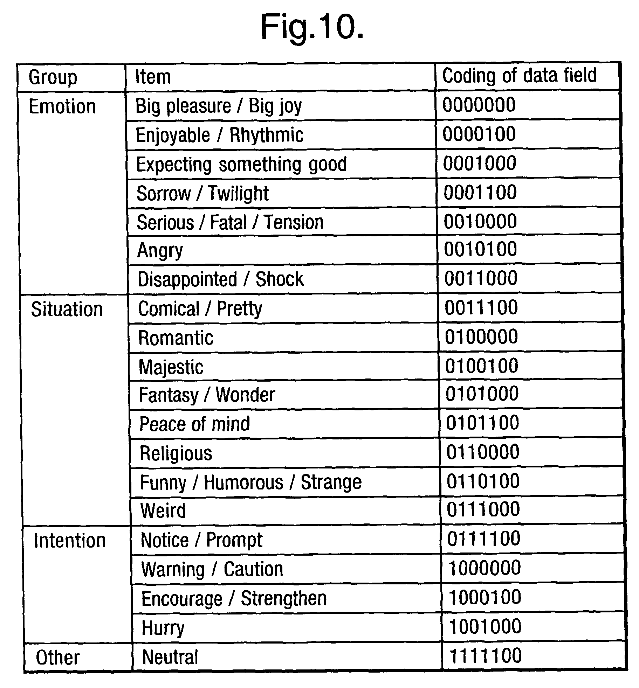

As with the sounds, the predefined pictures may be divided into groups, for instance emotion, situation, intention and other. Four such groups are illustrated in Figure 10, together with examples of code.

The pictures are intended to express something abstract like a feeling of pleasure, sorrow, comedy, seriousness, anger, etc. They are not intended to express concrete events such as Christmas, happy birthday, happy New Year, please call me, etc. As indicated in Figure 8, the header XX is made up of category aaa = 001 and service bb = 00. Furthermore, the data length may be cc = 01 by default and the data DD = ddddddd, with the function supporting 20 kinds of predefined pictures.

As illustrated in Figure 8, category aaa = 001 also supports a second service bb = 01, namely "display a headline on a board". This service is intended to send a "headline" sentence in addition to the text message.

When a receiver opens a text message including a headline sentence, the headline sentence is first displayed on the display of the receiver. The headline is displayed across the whole display and may be on a nicely designed background with a good font. In a preferred embodiment, the headline text is put within parenthesis, i.e. ◇ before the normal text message. Thus, a user might send a headline "<please call me!>", followed by the message "I have already been waiting for 30 minutes. What's happened to you?". As with the function of displaying a predefined picture, in the preferred embodiment, the text message is read by scrolling up the display with the jog dial.

The design board itself may already be predefined. Predefined text phrases could be provided, but preferably the user may input the headline sentence. Examples of headlines include "please call me", "I love you", "I shall kill you", "I am alone".

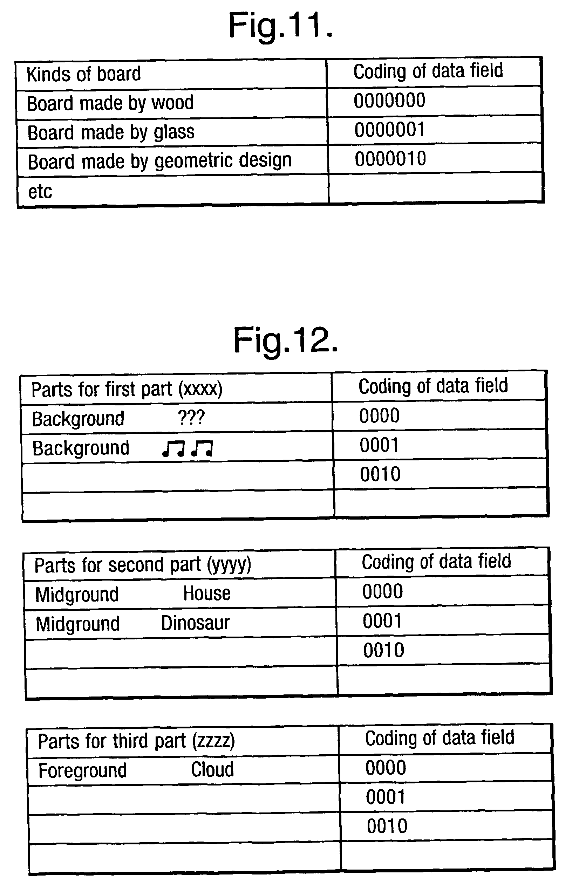

Figure 11 illustrates various kinds of board, together with examples of their codes. For the examples given, the board may be given an appearance of wood or glass. Similarly, it may be given a geometric design or any other design.

The function of "display a combined picture" as indicated in Figure 8 causes a combined picture to be sent. The combined picture comprises a plurality of parts made up from a plurality of overlaid corresponding layers. In the preferred embodiment, the combined picture consists of three overlaid layers, the layers including corresponding parts. In this way, the positions of the parts are fixed, but a sender can create various pictures easily by selecting the parts/layers separately.

As indicated in Figure 8, the header XX is made up of category aaa = 001 and service bb = 10. Furthermore, the data length may be cc =2 by default.

Compared to the other service items discussed above, there is a problem that 3 different layers are required and, hence, the code must signify all three layers individually so as to allow complete flexibility for the user in choosing combinations of layers.

With the data length set as 2 by default, data DD = rrxxxxy yyyzzzz. This data is divided such that rr = reserved and then xxxx, yyyy and zzzz are codes for respectively first, second and third layers. Thus, each layer can be 1 of 16 different images. The first, second and third layers will be predefined as background, mid ground or foreground images.

Figure 12 illustrates schematically examples for various parts or layers.

It will be appreciated that, for additional layers, it would be possible to increase the data length.

Returning to Figure 2, the memory 26 includes a database of the various codes and service items to which they refer. The transceiver is configured so as to allow a user to select, for transmission, a service item in the manner described above. In particular, the CPU, jog dial 12 and/or keypad 6 provide on the display 4 an indication of the service items for selection. Then, from the database of codes stored in the memory 26, the appropriate code is inserted with the SMS data for transmission. For a multi-layer image, the transceiver is configured to provide the user with a process of selection as described with reference to Figure 6 whereby the image for each layer is successively chosen. Based on the respective codes of the chosen images, the transceiver is configured to construct appropriate data DD (rrxxxxy yyyzzzz) including the codes for each layer. Furthermore, the transceiver is configured to arrange the data DD with the appropriate header XX and provide this for transmission with the SMS data in the format discussed above.

Of course, on the other hand, a transceiver embodying the present invention which receives codes for additional service items will use the header XX and data DD to determine the appropriate service item. In particular, it will refer to a database in the memory 26 to retrieve that service item.

Having received a header XX indicating the display of a combined picture, the transceiver is configured to examine the data DD so as to determine the individual codes within it. For each individual code, reference is made to the database in memory 26 so as to determine the appropriate image.

The transceiver is then configured to combine the layers to provide an image for display on the display 4. In particular, the transceiver is configured to construct the output image by taking each layer in a predetermined order and replacing parts of preceding layers with any parts in the same position in succeeding layers. For example, for the 3 layer arrangement of the preferred embodiment, where an image exists in the mid ground layer, this replaces corresponding parts of the background layer and where an image exists in the foreground layer, this replaces corresponding parts of the mid ground and background layer.

Thus, composite multiple layer images may be provided as service items with SMS messages.

## Claims

1. A transceiver (2) capable of transmitting messages, including:
a memory (26) for storing a plurality of service items together with respective data codes;
a user interface (4, 6) including a display (4) for selecting a service item for transmission with a message;
processing components (16, 18, 20, 22, 24) for transmitting and receiving messages to and from other transceivers; wherein
the processing components (24) transmit messages together with the data codes of any selected service item and identify the service items of any data codes received with messages such that the service items may be provided to the user;
the memory (26) is for storing a plurality of graphical images having respective identifying codes;
the user interface (6) allows selection of two or more graphical images to form a combined picture as a service item; and
the processing components (24) construct, for the combined pictures, data codes for transmission including the identifying codes of the selected graphical images, deconstruct, when appropriate, received data codes into the respective identifying codes and provide a combined picture on the display on the basis of the graphical images represented by the identifying codes; **characterised in that**:
the graphical images of a combined picture are different respective layers of the combined picture and the processing components (24) are configured to form a combined picture by overlaying the graphical images one on top of the other by taking each layer in a predetermined order and replacing parts of preceding layers with any parts in the same position in succeeding layers.

2. A transceiver according to claim 1 wherein, for transmission, the processing components (24) arrange the data codes into data bytes together with header bytes.

3. A transceiver according to claim 2 wherein the header bytes indicate the number of associated data bytes.

4. A transceiver according to claim 2 or 3 wherein each data code comprises 7 bits.

5. A transceiver according to claim 4 wherein each identifying code comprises 4 bits.

6. A transceiver according to any one of claims 2 to 5 wherein, for a combined picture of 3 graphical images, the processing components (24) provide a header byte and 2 data bytes including 2 corresponding data codes, the 2 data codes comprising 3 identifying codes and 2 reserved bits.

7. A transceiver according to any preceding claim wherein the processing components (24) construct data codes with the identifying codes in a predetermined order, the position of the identifying codes in the predetermined order signifying how the respective graphical images are to be combined.

8. A transceiver according to any preceding claim wherein the processing components (24) are configured so as to allow selection of each layer of graphical image from a respective plurality of graphical images by selectively displaying in turn each graphical image of the respective plurality of graphical images until a graphical image is selected for the respective layer.

9. A transceiver according to claim 8 wherein the processing components (24) are configured such that, when displaying one graphical image of a respective plurality of graphical images, said one graphical image is displayed as a combined resultant image with the graphical images selected for the other layers.

10. A transceiver according to claim 9 wherein the user interface (4) is operable to display in turn, each graphical image available for a respective layer and, once a graphical image has been selected for a layer, to display each possible graphical image for the next layer in combination with the graphical image already selected for the previous layer.

11. A transceiver according to any preceding claim wherein the service items are stored by category, sub-divided by service, with the data codes signifying respective service items within their respective service.

12. A transceiver according to claim 11 when appendant to claim 2 wherein the header bytes indicate the category and service of the service item of the associated data codes.

13. A transceiver according to any preceding claim wherein the processing components (24), upon opening a message with a service item for graphics, cause the graphics to appear over substantially the whole of the display.

14. A transceiver according to any preceding claim wherein the user interface (4, 6) is configured with the processing components (24) to enable the user to scroll any text of the received message onto the display.

15. A transceiver according to any preceding claim wherein the user interface (4, 6) is configured with the processing components (24) to enable the text to be scrolled selectively in place of the graphics or on top of the graphics.

16. A transceiver according to any preceding claim wherein the data codes of a plurality of service items may be transmitted together with a SMS message.

17. A transceiver according to any preceding claim wherein the service items include graphical images which are animated.

18. A transceiver according to any preceding claim comprising a digital mobile telephone (2).

19. A transceiver according to claim 18 further comprising a jog dial (12).

20. A transceiver according to any preceding claim wherein the messages are SMS messages.

21. A methodof providing, for an intercommunicating network of transceivers (2), additional service items for broadcast with messages, the method including:
storing (26) a plurality of service items in transceivers (2) together with respective data codes;
allowing selection (4, 6, 12) by transceivers (2) of service items for transmission with messages to other transceivers (2);
providing with messages the data codes of respective service items selected by transceivers (2) such that, upon receipt of messages with data codes, transceivers (2) provide the users with messages together with the service items identified by the data codes; further comprising
storing (26) in the transceivers (2) a plurality of graphical images having respective identifying codes;
allowing selection (4, 6, 12) of two or more graphical images to form a combined picture as a service item;
constructing (24) for the combined pictures data codes for transmission including the identifying codes of the selected graphical images;
deconstructing (24), when appropriate, received data codes into the respective identifying codes; and
providing combined pictures on the displays (4) of the transceivers (2) on the basis of the graphical images represented by the identifying codes; **characterised in that**:
the graphical images are overlaid one on top of the other to form a resultant combined picture by taking each layer in a predetermined order and replacing parts of preceding layers with any parts in the same position in succeeding layers.

22. A method according to claim 21 wherein, for each layer a user of a transceiver is provided consecutively with a display of each graphical image available for selection for the respective layer and, having selected a graphical image for a layer, the user is provided in turn with each of the available graphical images for the respective layer displayed in combination with the graphical image selected for the previous layer.

23. A method according to claim 21 or 22 for providing, in an intercommunicating network of transceivers using SMS, additional service items for broadcast with SMS.

## Patentansprüche

1. Transceiver (2) zum Übertragen von Nachrichten, mit
einem Speicher (26) zum Speichern mehrerer Servicepositionen zusammen mit jeweiligen Datencodes;
einer Benutzerschnittstelle (4, 6) mit einer Anzeige (4) zum Auswählen einer Serviceposition zum Übertragen mit einer Nachricht;
Verarbeitungskomponenten (16, 18, 20, 22, 24) zum Senden und Empfangen von Nachrichten zu und von anderen Transceivern, wobei die Verarbeitungskomponenten (24) Nachrichten zusammen mit den Datencodes irgendeiner ausgewählten Serviceposition senden und die Servicepositionen irgendwelcher mit Nachrichten empfangenen Datencodes identifizieren, sodass die Serviceposition dem Benutzer bereitgestellt werden können;
der Speicher (26) dem Speichern mehrerer Graphikbilder mit jeweiligen Identifikationscodes dient;
die Benutzerschnittstelle (6) eine Auswahl von zwei oder mehr Graphikbildern erlaubt, um ein kombiniertes Bild als eine Serviceposition zu bilden; und
die Verarbeitungskomponenten (24) für die kombinierten Bilder Datencodes zum Senden aufbauen, die die Identifikationscodes der ausgewählten Graphikbilder enthalten, gegebenenfalls empfangene Datencodes in die jeweiligen Identifikationscodes zerlegen und auf der Basis der durch die Identifikationscodes dargestellten Graphikbilder ein kombiniertes Bild auf der Anzeige vorsehen,
**dadurch gekennzeichnet,**
**dass** die Graphikbilder eines kombinierten Bildes unterschiedliche jeweilige Schichten des kombinierten Bildes sind und die Verarbeitungskomponenten (24) zum Bilden eines kombinierten Bildes durch Überlagern der Graphikbilder übereinander, indem jede Schicht in einer bestimmten Reihenfolge genommen und Teile vorheriger Schichten durch Teile in der gleichen Position in nachfolgenden Schichten ersetzt werden, ausgebildet sind.

2. Transceiver nach Anspruch 1, bei welchem die Verarbeitungskomponenten (24) zum Senden die Datencodes in Datenbytes zusammen mit Kopfbytes anordnen.

3. Transceiver nach Anspruch 2, bei welchem die Kopfbytes die Anzahl zugehöriger Datenbytes angeben.

4. Transceiver nach Anspruch 2 oder 3, bei welchem jeder Datencode 7 Bits aufweist.

5. Transceiver nach Anspruch 4, bei welchem jeder Identifikationscode 4 Bits aufweist.

6. Transceiver nach einem der Ansprüche 2 bis 5, bei welchem die Verarbeitungskomponenten (24) für ein kombiniertes Bild von drei Graphikbildern ein Kopfbyte und 2 Datenbytes mit 2 entsprechenden Datencodes vorsehen, wobei die 2 Datencodes 3 Identifikationscodes und 2 reservierte Bits aufweisen.

7. Transceiver nach einem der vorherigen Ansprüche, bei welchem die Verarbeitungskomponenten (24) Datencodes mit den Identifikationscodes in einer bestimmten Reihenfolge aufbauen, wobei die Position der Identifikationscodes in der bestimmten Reihenfolge kennzeichnet, wie die jeweiligen Graphikbilder zu kombinieren sind.

8. Transceiver nach einem der vorherigen Ansprüche, bei welchem die Verarbeitungskomponenten (24) so ausgebildet sind, um eine Auswahl jeder Schicht eines Graphikbildes aus einer jeweiligen Vielzahl von Graphikbildern durch selektives Anzeigen jedes Graphikbildes der jeweiligen Vielzahl von Graphikbildern im Wechsel, bis ein Graphikbild für die jeweilige Schicht ausgewählt ist, zu erlauben.

9. Transceiver nach Anspruch 8, bei welchem die Verarbeitungskomponenten (24) so ausgebildet sind, dass beim Anzeigen eines Graphikbildes einer jeweiligen Vielzahl von Graphikbildern das eine Graphikbild als ein kombiniertes Ergebnisbild mit den für die anderen Schichten ausgewählten Graphikbildern angezeigt wird.

10. Transceiver nach Anspruch 9, bei welchem die Benutzerschnittstelle (4) bedienbar ist, um im Wechsel jedes für eine jeweilige Schicht zur Verfügung stehende Graphikbild anzuzeigen und um, wenn einmal ein Graphikbild für eine Schicht ausgewählt worden ist, jedes mögliche Graphikbild für die nächste Schicht in Kombination mit dem bereits für die vorherige Schicht ausgewählten Graphikbild anzuzeigen.

11. Transceiver nach einem der vorherigen Ansprüche, bei welchem die Servicepositionen in durch den Service unterteilten Kategorien gespeichert sind, wobei die Datencodes jeweilige Servicepositionen in ihrem jeweiligen Service kennzeichnen.

12. Transceiver nach Anspruch 11 in Abhängigkeit von Anspruch 2, bei welchem die Kopfbytes die Kategorie und den Service der Serviceposition der zugehörigen Datencodes kennzeichnen.

13. Transceiver nach einem der vorherigen Ansprüche, bei welchem die Verarbeitungskomponenten (24) beim Öffnen einer Nachricht mit einer Serviceposition für Graphiken die Graphiken über im Wesentlichen die ganze Anzeige erscheinen lassen.

14. Transceiver nach einem der vorherigen Ansprüche, bei welchem die Benutzerschnittstelle (4, 6) mit den Verarbeitungskomponenten (24) so konfiguriert ist, dass sie den Benutzer einen Text der empfangenen Nachricht auf der Anzeige scrollen lässt.

15. Transceiver nach einem der vorherigen Ansprüche, bei welchem die Benutzerschnittstelle (4, 6) mit den Verarbeitungskomponenten (24) so konfiguriert ist, dass sie den zu scrollenden Text wahlweise anstelle der Graphiken oder über den Graphiken ermöglicht.

16. Transceiver nach einem der vorherigen Ansprüche, bei welchem die Datencodes mehrerer Servicepositionen zusammen mit einer SMS-Nachricht gesendet werden können.

17. Transceiver nach einem der vorherigen Ansprüche, bei welchem die Servicepositionen Graphikbilder enthalten, die animiert sind.

18. Transceiver nach einem der vorherigen Ansprüche, mit einem digitalen Mobiltelefon (2).

19. Transceiver nach Anspruch 18, ferner mit einem Jog-Dial (12).

20. Transceiver nach einem der vorherigen Ansprüche, bei welchem die Nachrichten SMS-Nachrichten sind.

21. Verfahren zum Bereitstellen zusätzlicher Servicepositionen zum Senden mit Nachrichten für ein Wechselnetz von Transceivern (2), wobei das Verfahren enthält:
Speichern (26) mehrerer Servicepositionen in Transceivern (2) zusammen mit jeweiligen Datencodes;
Erlauben einer Auswahl (4, 6, 12) von Servicepositionen durch die Transceiver (2) zum Senden mit den Nachrichten zu anderen Transceivern (2);
Versehen der Datencodes jeweiliger durch die Transceiver (2) ausgewählter Servicepositionen mit Nachrichten derart, dass beim Empfang von Nachrichten mit den Datencodes die Transceiver (2) dem Benutzer Nachrichten zusammen mit den durch die Datencodes identifizierten Servicepositionen bereitstellen, ferner mit Speichern (26) mehrerer Graphikbilder mit den jeweiligen Identifikationscodes in den Transceivern (2);
Erlauben einer Auswahl (4, 6, 12) von zwei oder mehr Graphikbildern, um ein kombiniertes Bild als eine Serviceposition zu bilden;
Aufbauen (24) von Datencodes zum Senden mit den Identifikationscodes der ausgewählten Graphikbilder für die kombinierten Bilder;
gegebenenfalls Zerlegen (24) empfangener Datencodes in die jeweiligen Identifikationscodes; und
Bereitstellen kombinierter Bilder auf den Anzeigen (4) der Transceiver (2) auf der Basis der durch die Identifikationscodes dargestellten Graphikbilder,
**dadurch gekennzeichnet,**
**dass** die Graphikbilder übereinander gelegt werden, um ein resultierendes kombiniertes Bild zu bilden, indem jede Schicht in einer bestimmten Reihenfolge genommen wird und Teile von vorherigen Schichten mit Teilen in der gleichen Position in nachfolgenden Schichten ersetzt werden.

22. Verfahren nach Anspruch 21, bei welchem einem Benutzer eines Transceivers für jede Schicht fortlaufend eine Anzeige jedes für eine Auswahl für die jeweilige Schicht zur Verfügung stehenden Graphikbildes bereitgestellt wird und dem Benutzer nach einer Auswahl eines Graphikbildes für eine Schicht im Wechsel jedes der zur Verfügung stehenden Graphikbilder für die jeweilige Schicht, die in Kombination mit dem für die vorherige Schicht ausgewählten Graphikbild angezeigt wird, bereitgestellt wird.

23. Verfahren nach Anspruch 21 oder 22 zum Bereitstellen zusätzlicher Servicepositionen zum Senden mit SMS in einem Wechselnetz von Transceivern mit SMS.

## Revendications

1. Émetteur-récepteur (2) capable d'émettre des messages, comprenant :
une mémoire (26) pour stocker une pluralité d'éléments de service ainsi que des codes de données respectifs ;
une interface d'utilisateur (4, 6) comprenant un affichage (4) pour sélectionner un élément de service pour l'émission avec un message ;
des composantes de traitement (16, 18, 20, 22, 24) pour émettre et recevoir des messages vers et à partir d'autres émetteurs-récepteurs, dans lesquels
les composantes de traitement (24) émettent des messages ainsi que des codes de données d'un élément de service quelconque sélectionné et identifient des éléments de service de codes de données quelconques reçus avec des messages pour que les éléments de service puissent être fournis pour l'utilisateur ;
la mémoire (26) est destinée à stocker une pluralité d'images graphiques ayant des codes d'identification respectifs ;
l'interface d'utilisateur (6) permet la sélection de deux images graphiques ou plus pour former une image combinée comme un élément de service ; et
les composantes de traitement (24) construisent, pour les images combinées, des codes de données pour l'émission comprenant les codes d'identification des images graphiques sélectionnées, détruisent, lorsque cela est approprié, des codes de données reçus dans les codes d'identification respectifs et fournissent une image combinée sur l'affichage sur la base des images graphiques représentées par les codes d'identification ; **caractérisé en ce que** :
les images graphiques d'une image combinée sont différentes couches respectives de l'image combinée et les composantes de traitement (24) sont configurées pour former une image combinée en chevauchant les images graphiques, l'une au-dessus de l'autre, en prenant chaque couche dans un ordre prédéterminé et en remplaçant des parties des couches précédentes par des parties quelconques dans la même position dans les couches suivantes.

2. Émetteur-récepteur selon la revendication 1, dans lequel pour l'émission, les composantes de traitement (24) disposent les codes de données en octets de données ainsi qu'en octets d'en-tête.

3. Émetteur-récepteur selon la revendication 2 dans lequel les octets d'en-tête indiquent le nombre d'octets de données associés.

4. Émetteur-récepteur selon la revendication 2 ou 3 dans lequel chaque code de données comprend 7 bits.

5. Émetteur-récepteur selon la revendication 4 dans lequel chaque code d'identification comprend 4 bits.

6. Émetteur-récepteur selon l'une quelconque des revendications 2 à 5 dans lequel, pour une image combinée de 3 images graphiques, les composantes de traitement (24) fournissent un octet d'en-tête et 2 octets de données comprenant 2 codes de données correspondants, les 2 codes de données comprenant 3 codes d'identification et 2 bits réservés.

7. Émetteur-récepteur selon l'une quelconque des revendications précédentes dans lequel les composantes de traitement (24) construisent des codes de données avec les codes d'identification dans un ordre prédéterminé, la position des codes d'identification dans l'ordre prédéterminé signifiant comment les images graphiques respectives sont à combiner.

8. Émetteur-récepteur selon l'une quelconque des revendications précédentes dans lequel les composantes de traitement (24) sont configurées afin de permettre la sélection de chaque couche d'image graphique à partir d'une pluralité respective d'images graphiques en affichant sélectivement à son tour chaque image graphique de la pluralité respective d'images graphiques jusqu'à ce qu'une image graphique soit sélectionnée pour la couche respective.

9. Émetteur-récepteur selon la revendication 8, dans lequel les composantes de traitement (24) sont configurées pour que, lors de l'affichage d'une image graphique d'une pluralité respective d'images graphiques, ladite image graphique soit affichée comme une image résultante combinée avec les images graphiques sélectionnées pour les autres couches.

10. Émetteur-récepteur selon la revendication 9 dans lequel l'interface d'utilisateur (4) est utilisable pour afficher à son tour, chaque image graphique disponible pour une couche respective et, une fois qu'une image graphique a été sélectionnée pour une couche, pour afficher chaque image graphique possible pour la couche suivante en combinaison avec l'image graphique déjà sélectionnée pour la couche précédente.

11. Émetteur-récepteur selon l'une quelconque des revendications précédentes dans lequel les éléments de service sont stockés par catégorie, sous-divisés par service, avec les codes de données signifiant des éléments de service respectifs dans leur service respectif.

12. Émetteur-récepteur selon la revendication 11 lorsqu'elle dépend de la revendication 2, dans lequel les octets d'en-tête indiquent la catégorie et le service de l'élément de service des codes de données associés.

13. Émetteur-récepteur selon l'une quelconque des revendications précédentes dans lequel les composantes de traitement (24), lors de l'ouverture d'un message avec un élément de service pour des graphiques, obligent les graphiques à apparaître sur substantiellement la totalité de l'affichage.

14. Émetteur-récepteur selon l'une quelconque des revendications précédentes dans lequel l'interface d'utilisateur (4, 6) est configurée avec les composantes de traitement (24) pour permettre à l'utilisateur de faire défiler un texte quelconque sur l'affichage.

15. Émetteur-récepteur selon l'une quelconque des revendications précédentes dans lequel l'interface d'utilisateur (4, 6) est configurée avec les composantes de traitement (24) pour permettre de faire défiler sélectivement le texte à la place des graphiques ou par dessus les graphiques.

16. Émetteur-récepteur selon l'une quelconque des revendications précédentes dans lequel les codes de données d'une pluralité d'éléments de service peuvent être émis avec un message SMS.

17. Émetteur-récepteur selon l'une quelconque des revendications précédentes dans lequel les éléments de service comprennent des images graphiques qui sont animées.

18. Émetteur-récepteur selon l'une quelconque des revendications comprenant un téléphone mobile numérique (2).

19. Émetteur-récepteur selon la revendication 18 comprenant en outre un bouton de défilement (12).

20. Émetteur-récepteur selon l'une quelconque des revendications précédentes dans lequel les messages sont des SMS.

21. Procédé de fourniture, pour un réseau intercommunication d'émetteur-récepteur (2), d'éléments de service supplémentaires pour la diffusion avec des messages, le procédé comprenant :
le stockage (26) d'une pluralité d'éléments de service dans des émetteurs-récepteurs (2) ainsi que des codes de données respectifs ;
l'autorisation de sélection (4, 6, 12) par les émetteurs-récepteurs (2) d'éléments de service pour l'émission avec des messages à d'autres émetteurs-récepteurs (2) ;
la fourniture avec des messages de codes de données d'éléments de service respectifs sélectionnés par les émetteurs-récepteurs (2) pour que, lors de la réception des messages avec des codes de données, les émetteurs-récepteurs (2) fournissent aux utilisateurs des messages ainsi que les éléments de service identifiés par les codes de données ; comprenant en outre
le stockage (26) dans les émetteurs-récepteurs (2) d'une pluralité d'images graphiques ayant des codes d'identification respectifs ;
l'autorisation de sélection (4, 6, 12) de deux images graphiques ou plus pour former une image combinée comme un élément de service ;
la construction (24) pour les codes de données d'images combinées pour l'émission comprenant les codes d'identification des images graphiques sélectionnées ;
la déconstruction (24), lorsqu'elle est appropriée, des codes de données reçus dans les codes d'identification respectifs ; et
la fourniture d'images combinées sur l'affichage (4) des émetteurs-récepteurs (2) sur la base des images graphiques représentées par les codes d'identification ; **caractérisé en ce que** :
les images graphiques sont superposées les unes au-dessus les autres pour former une image combinée résultante en prenant chaque couche dans un ordre prédéterminé et en remplaçant des parties des couches précédentes par des parties quelconques dans la même position dans les couches suivantes.

22. Procédé selon la revendication 21 dans lequel, pour chaque couche, un utilisateur d'un émetteur-récepteur est consécutivement pourvu d'un affichage de chaque image graphique disponible pour la sélection pour la couche respective et, ayant une image graphique sélectionnée pour une couche, l'utilisateur reçoit à son tour chacune des images graphiques disponible pour la couche respective affichée en combinaison avec l'image graphique sélectionnée pour la couche précédente.

23. Procédé selon la revendication 21 ou 22 pour la fourniture, dans un réseau d'intercommunication d'émetteurs-récepteurs utilisant un SMS, d'éléments de service supplémentaires pour la diffusion avec un SMS.
